# EUROPEAN PATENT APPLICATION

(11) **EP 2 339 813 A1**
(43) Date of publication of application: **29.06.2011**
(21) Application number: 09813990.0
(22) Date of filing: 06.07.2009
(51) Int. Cl.: H04L 29/06

(54) **METHOD, SYSTEM AND DEVICE FOR REALIZING THE USER SIDE TERMINAL OBTAINS A PASSWORD**

(30) Priority: 18.09.2008 CN 200810149040
(71) Applicant: Huawei Technologies Co., Ltd., Longgang District, Shenzhen Guangdong 518129 (CN)
(72) Inventor: WU, Wei c/o Huawei Technologies Co.Ltd., Int.Prop.Dept., Shenzhen (CN)
(74) Representative: Kreuz, Georg Maria
(86) International application number: PCT/CN2009/072647
(87) International publication number: WO 2010/031269

(57) **Abstract**

In the field of communication technologies, a method, a system and a device for enabling a user side terminal to obtain a password are provided. The method includes: receiving, by a user side terminal, a notification message delivered from an Optical Line Terminal (OLT), in which the notification message carries password information delivered from the OLT; obtaining the password information carried in the notification message, and returning a response message to the OLT; and accomplishing an authentication and registration process with the OLT according to the password information. The system includes an OLT and a user side terminal. The device includes a user side terminal and an OLT. The present invention is capable of realizing the change of a password of an Optical Network Unit (ONU)/Optical Network Terminal (ONT) just by a delivery operation at an OLT side when the password of the ONU/ONT needs to be changed, so that the efficiency of the change work is improved, the workload of the change is reduced, the manpower cost for home service of maintenance personnel is saved, and the maintenance cost of the operator is greatly reduced.

## Description

This application claims priority to Chinese Patent Application No. 200810149040.7, filed with the Chinese Patent Office on September 18, 2008 and entitled "METHOD, SYSTEM AND DEVICE FOR ENABLING USER SIDE TERMINAL TO OBTAIN PASSWORD", which is incorporated herein by reference in its entirety.

### FIELD OF THE INVENTION

The present invention relates to the field of communication technologies, and in particular, to a method, a system and a device for enabling a user side terminal to obtain a password.

### BACKGROUND OF THE INVENTION

The Passive Optical Network, PON, technology is a point-to-multipoint optical access technology, and the so-called passive refers to that an Optical Distribution Network, ODN, of a PON system does not contain any active electronic element or electronic power supply, and is completely formed of passive elements such as an optical splitter, so that the management and maintenance cost is low. According to the difference of employed L2 access technologies, the PON system may be further divided into several types, such as Gigabit Passive Optical Network, GPON, and Ethernet Passive Optical Network, EPON.

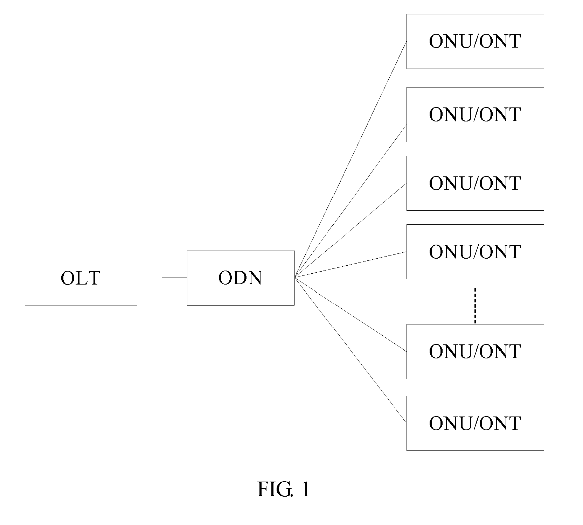

Generally, the PON system mainly employs a tree-like topological structure. As shown in FIG. 1, the PON system includes an Optical Line Terminal, OLT, at a central office side, Optical Network Units, ONUs, or Optical Network Terminals, ONTs, at a user side, and an ODN. As the OLT may be connected to multiple ONUs/ONTs through one PON port, a set of mechanisms for detecting and authenticating the ONU/ONT are needed.

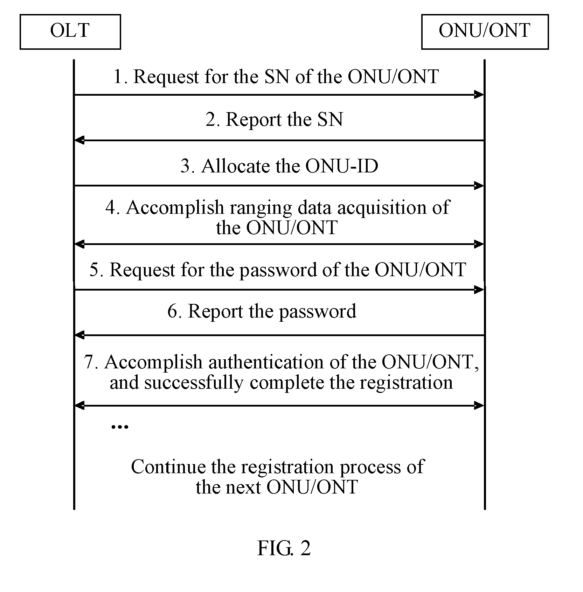

In GPON Standard G.984.3, a Serial Number, SN, and a password are defined, for detecting and authenticating an ONU/ONT device. The detection and authentication of the ONU/ONT device are accomplished in a registration and activation process. FIG. 2 is a schematic interaction view of implementing detection and authentication of an ONU/ONT device in a specific registration and activation process, in which:
1. an OLT sends an SN report request to all ONUs/ONTs connected to PON ports thereof first;
2. the ONUs/ONTs receive the request from the OLT, and report their own SNs to the OLT;
3. the OLT allocates ONU Identifiers, ONU-IDs, according to the SNs reported by the ONUs/ONTs, and sends the ONU-IDs to corresponding ONUs/ONTs, in which the ONU-ID allocated by the OLT to the ONUs/ONTs at the same PON port is unique.
4. the OLT accomplishes ranging data acquisition of the ONUs/ONTs;
5. the OLT sends a password report request to the ONUs/ONTs;
6. the ONUs/ONTs report their own passwords to the OLT; and
7. the OLT accomplishes the authentication of the ONUs/ONTs according to the passwords; and so far, the entire registration process of the ONUs/ONTs is completed, and the ONUs/ONTs are in an activated status.

The password used in the above authentication process is manually input by a user at an ONU/ONT side when the ONU/ONT device is powered on and registered for the first time, and the ONU/ONT device locally saves the password input by the user, such that the password does not need to be input any more afterwards.

The prior art has the following disadvantages:
Since the password of the ONU/ONT device is manually input by a user and locally saved when the ONU/ONT device is powered on and registered for the first time, if an operator considers that the password allocated to the ONU/ONT when being powered on and registered has a security problem and intends to change the password, or the password of each ONU/ONT needs to be changed because the allocation scheme of the password of each ONU/ONT device connected to the OLT is re-planned, home service of maintenance personnel must be arranged to change the password of the ONU/ONT device, which greatly increases the manpower cost for maintenance, and affects the transmission service.

### SUMMARY OF THE INVENTION

The present invention is directed to a method, a system and a device for enabling a user side terminal to obtain a password, so as to improve the efficiency of the change work and reduce the workload of the change when a password of an ONU/ONT device side needs to be changed. The following technical solutions are employed.

According to the first aspect of the present invention a method for enabling a user side terminal to obtain a password includes:
receiving, by a user side terminal, a notification message delivered from an OLT, in which the notification message carries password information delivered from the OLT;
obtaining, by the user side terminal, the password information carried in the notification message, and returning a response message to the OLT; and
   accomplishing, by the user side terminal, an authentication and registration process with the OLT according to the password information.

According to the second aspect of the present invention a system for enabling a user side terminal to obtain a password includes an OLT and at least one user side terminal, where:
the OLT is configured to deliver a notification message, in which the notification message carries password information delivered from the OLT; receive a response message returned from the user side terminal; and accomplish an authentication and registration process by the user side terminal according to the password information; and
the user side terminal is configured to receive the notification message delivered from the OLT, acquire the password information carried in the notification message, return the response message to the OLT, and accomplish the authentication and registration process with the OLT according to the password information.

According to the third aspect of the present invention a user side terminal includes:
a receiving module, configured to receive a notification message delivered from an OLT;
an acquisition module, configured to acquire password information carried in the notification message;
a sending module, configured to return a response message to the OLT; and
an authentication module, configured to accomplish an authentication and registration process with the OLT according to the password information acquired by the acquisition module.

According to the fourth aspect of the present invention an optical line terminal (OLT) includes:
a sending module, configured to deliver a notification message to a user side terminal, in which the notification message carries password information delivered from the OLT;
a receiving module, configured to receive a response message returned from the user side terminal; and
an authentication module, configured to accomplish an authentication and registration process by the user side terminal based on the password information, according to the response message received by the receiving module.

It can be known from the above technical solutions that, when the password of the ONU/ONT needs to be changed, the change of the password of the ONU/ONT can be realized just by a delivery operation at an OLT side, such that the efficiency of the change work is improved, and the workload of the change is reduced, thereby lowering the maintenance cost of the operator.

### BRIEF DESCRIPTION OF THE DRAWINGS

FIG. 1 is a schematic view of a tree-like topological structure of a PON system in the prior art;
FIG. 2 is a schematic view of a specific authentication and registration process of an ONU/ONT in the prior art;
FIG. 3 is a schematic flow chart of changing a password of an ONU/ONT at an OLT side according to Embodiment 1 of the present invention;
FIG. 4 is a schematic flow chart of changing a password of an ONU/ONT at an OLT side according to Embodiment 2 of the present invention;
FIG. 5 is a schematic view of a system for enabling a terminal to obtain a password according to Embodiment 3 of the present invention;
FIG. 6 is a schematic view of a user side terminal according to Embodiment 4 of the present invention; and
FIG. 7 is a schematic view of an OLT according to Embodiment 5 of the present invention.

### DETAILED DESCRIPTION OF THE EMBODIMENTS

To make the objectives, technical solutions, and advantages of the present invention clearer, the embodiments of the present invention are further described in detail below with reference to the accompanying drawings.

When a password of an ONU/ONT needs to be changed, directed to the problem that the password of the ONU/ONT can only be changed at a user side currently, the present invention provides a method for enabling a terminal to obtain a password, which includes: receiving, by a user side terminal, a notification message delivered from an OLT, in which the notification message carries password information delivered from the OLT; acquiring, by the user side terminal, the password information carried in the notification message, and returning a response message to the OLT; and accomplishing, by the user side terminal, an authentication and registration process with the OLT according to the password information.

The method of the present invention is capable of realizing the change of the password of the ONU/ONT just by a delivery operation at an OLT side, such that the efficiency of the change work is improved, and the workload of the change is reduced, thereby lowering the maintenance cost of the operator. The technical solutions of the present invention are described in detail below with reference to the embodiments.

### Embodiment 1

The embodiment of the present invention provides a method for enabling a terminal to obtain a password, and description is made in this embodiment with an ONU/ONT in a PON system as a specific example of the terminal. Through the method according to the embodiment of the present invention, a password is delivered from an OLT side of the PON system to an ONU/ONT side, thus achieving the purpose of enabling the ONU/ONT side to obtain the corresponding password.

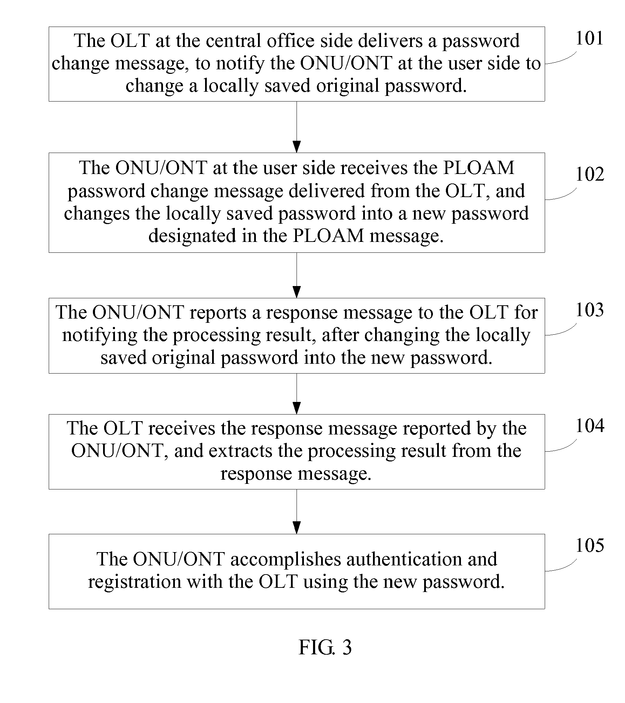

For ease of illustration, the embodiment of the present invention is specifically described with a scenario in which a password of an ONU/ONT device in a GPON system needs to be changed. Referring to FIG. 3, a specific implementation process includes the following steps.

In Step 101, an OLT at a central office side delivers a password change message, to notify an ONU/ONT at a user side to change a locally saved original password.

In the embodiment of the present invention, the password change message delivered by the OLT may be implemented with a newly added Physical Layer Operation Administration and Maintenance (PLOAM) message, and the OLT delivers the password change message to the ONU/ONT through a newly added PLOAM message in a downlink direction (the message is sent from the central office to the user side). The new added downlink PLOAM message is specifically defined in Table 1.

**Table 1**

| Password Change Message | | |
|---|---|---|
| Byte | Content | Description |
| 1 | ONU-ID | ONU/ONT Identifier Index |
| 2 | Message ID | Message ID |
| 3 | pppppppp | Password 1 |
| ... | ... | ... |
| 12 | pppppppp | Password 10 |

### In Table 1:

ONU-ID is an ONU/ONT index, which is an identifier allocated by the OLT to the corresponding ONU/ONT according to the SN reported by the ONU/ONT, and the ONU-ID allocated by the OLT to the ONU/ONT at the same PON port is unique;
Message ID is a message identifier, configured to indicate a specific serial number of each delivered message; and
pppppppp is a changed new password, in which each password may occupy 10 bytes.

As multiple ONUs/ONTs are generally connected to the OLT, for the changing of passwords of multiple ONUs/ONTs at one PON port, multiple ONU-IDs are carried in the PLOAM message (each ONU-ID is corresponding to the respective ONU/ONT), and a changed new password is correspondingly allocated according to the ONU-ID of each ONU/ONT, in which each password occupies 10 bytes. Table 2 schematically shows a PLOAM message delivered by the OLT to multiple ONUs/ONTs.

**Table 2**

| ONU/ONT Identifier | Password |
|---|---|
| 1 | 123456789 |
| 2 | 234567891 |
| 3 | 345678912 |
| ... | ... |

Since the embodiment of the present invention is described with the scenario in which the password of the ONU/ONT device needs to be changed as an example, before the OLT delivers the PLOAM password change message as described in Step 101, the ONU/ONT has accomplished an authentication and registration process using an existing password input and saved when the ONU/ONT is powered on, and the process is the same as the detection and authentication process of an ONU/ONT device described in the prior art, so the details thereof will not be given herein again.

In Step 102, the ONU/ONT at the user side receives the PLOAM password change message delivered from the OLT, and changes a locally saved password into a new password designated in the PLOAM message.

After receiving the PLOAM message, the ONU/ONT at the user side finds the corresponding new password from the PLOAM message according to its own ONU-ID, and changes the locally saved original password into the new password designated in the PLOAM message.

In Step 103, the ONU/ONT reports a response message to the OLT for notifying a processing result, after changing the locally saved original password into the new password.

The reporting, by the ONU/ONT, the response message to the OLT may be specifically that the ONU/ONT reports the processing result to the OLT through a newly added PLOAM message in an uplink direction (a message is sent from the user side to the central office). The processing result may be, for example, successful change or failed change (for example, the ONU/ONT refuses to change). The uplink PLOAM message may be specifically defined in Table 3.

**Table 3**

| Password Change Result Report Message | | | |
|---|---|---|---|
| Byte | Content | Description | |
| 1 | ONU-ID | ONU/ONT Identifier Index | |
| 2 | Message ID | Message ID | |
| 3 | Result | Processing result: | 0: successful change |
| | | | 1: failed change |
| ... | Reserved | ... | |
| 12 | Reserved | ... | |

In Table 3:
ONU-ID is an ONU/ONT identifier index, which is an identifier allocated by the OLT to the corresponding ONU/ONT according to the SN reported by the ONU/ONT, and the ONU-ID allocated by the OLT to the ONU/ONT at the same PON port is unique;
Message ID is a message identifier, configured to indicate a specific serial number of each delivered message; and
Result is a processing result, in which 0 indicates successful change and 1 indicates failed change.

In Step 104, the OLT receives the response message reported by the ONU/ONT, and extracts the processing result from the response message.

As described above, this embodiment is described with the implementation of the response message by the ONU/ONT through the newly added PLOAM message carrying the processing result information as an example.

For ease of illustration, this embodiment is described with successful change of the password by the ONU/ONT as an example, that is, so far, the ONU/ONT has successfully changed the original password using the new password delivered from the OLT.

In Step 105, the ONU/ONT accomplishes the authentication and registration with the OLT using the new password.

The ONU/ONT, after successful change of the password, employs the changed new password to re-register, and the registration process is the same as the detection and authentication process of an ONU/ONT device in the prior art, so the details thereof will not be given herein again.

In addition, for the ONU/ONT of failed change of the password (result of 1), the OLT at the central office side may re-deliver the PLOAM password change message according to the received response message, and reference can be made to the above Steps 101 to 103 for the process, the details of which will not be described herein again as the method is similar.

The embodiment of the present invention is described with the scenario in which the password of the ONU/ONT device needs to be changed as an example. It should be known to persons skilled in the art that the method according to the embodiment of the present invention is also applicable in a case of initially allocating a password to an ONU/ONT device connected to the OLT, that is, in an authentication, registration, and activation process, the OLT first allocates an ONU-ID to the ONU/ONT, then sends the ONU-ID to the ONU/ONT, accomplishes ranging data acquisition of the ONU/ONT, and delivers a new password in the form of a PLOAM message to the ONU/ONT that needs to be authenticated and registered according to the ONU-ID sent to the ONU/ONT. The method is similar, and the details thereof will not be described herein again.

The embodiment of the present invention is described with the GPON system as an example. Likewise, it should be known to persons skilled in the art that the method according to the embodiment of the present invention is applicable in a similar EPON system having a key-based authentication manner, in which the function of the key is similar to the password of the GPON. The specific delivery of a message carrying the key may be implemented by extending an Ethernet OAM message of the EPON, so as to enable the OLT in the EPON system to change the key of the ONU/ONT. The method is similar, and the details thereof will not be described herein again.

To sum up, the embodiment of the present invention provides a method for enabling a terminal to obtain a password, and the change of the password of the ONU/ONT is realized through the method by providing a password from the OLT side to the ONU/ONT device, such that the efficiency of the change work is improved, and the workload of the change is reduced, thereby lowering the maintenance cost of the operator.

In view of the above, in Embodiment 1, the implementation of change of the password of the ONU/ONT at the OLT side is described with the GPON system as an example, and the description is made with the newly added PLOAM message delivered in the change of the password of the ONU/ONT at the OLT side as an example. As the PLOAM message is unencrypted, some security risk exists in the transmission process. Therefore, the following method may be used in order to further ensure the security of the password in delivery from the OLT to the ONU/ONT, and the details are shown in Embodiment 2 below.

### Embodiment 2

The embodiment of the present invention provides a method for enabling a terminal to obtain a password, and the change of a password of an ONU/ONT may be implemented at an OLT side through the method, such that the workload of maintenance is reduced, and the manpower cost for maintenance is greatly lowered.

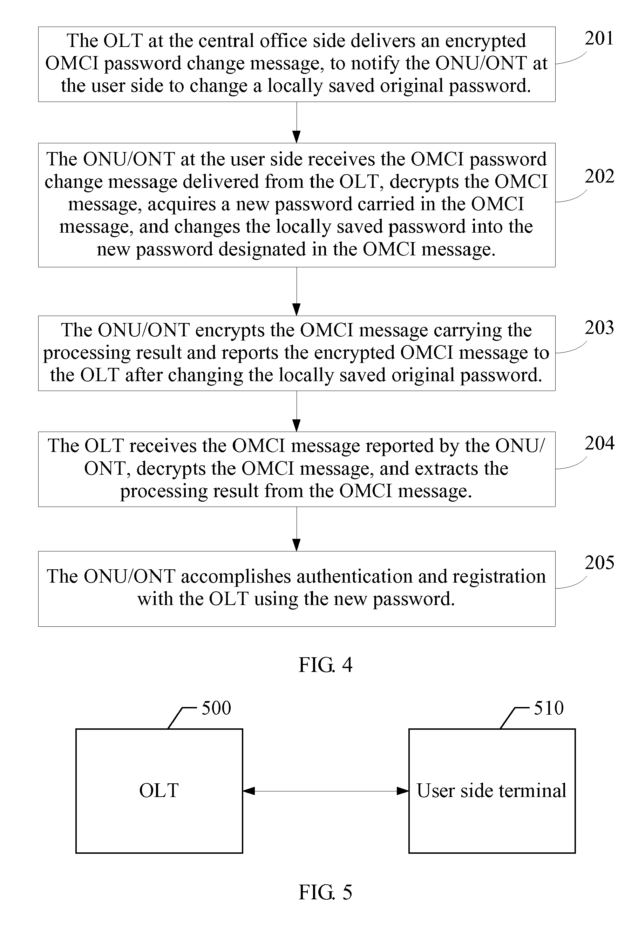

For ease of illustration, the embodiment of the present invention is also described with a scenario in which a password of an ONU/ONT device in a GPON system needs to be changed. Referring to FIG. 4, an OLT at a central office side intends to change the password of the ONU/ONT at a user side, so as to change an original password into a new password, and the specific implementation process is as follows.

In Step 201, the OLT at the central office side delivers an encrypted ONU Management and Control Interface, OMCI, password change message, to notify the ONU/ONT at the user side to change a locally saved original password.

In the embodiment of the present invention, the password change message delivered by the OLT is specifically an OMCI message, and the OLT delivers the password change message to the ONU/ONT through a newly added OMCI message in a downlink direction (the message is sent from the central office to the user side).

The OMCI message is an ONU Management and Control Interface message, and in an existing OMCI message applied in a management entity of the ONT in the GPON, the OMCI message is extended to add a password attribute field for carrying the password of the ONU/ONT, and supporting read and write. The password attribute field is defined in Table 4.

**Table 4**

| | |
|---|---|
| Password | This attribute indicates the password of the ONU/ONT (unit: byte), and supports read and write. |

The OLT may implement the delivery of the password change message to the ONU/ONT by delivering the OMCI message, in which the message carries the password needed to be changed. It should be known to persons skilled in the art that as the OMCI message may be encrypted, the OMCI message is encrypted before delivery, and the encryption manners may be, for example, Advanced Encryption Standard, AES, 128, which may be flexibly used according to actual demands. The specific encryption manner is not limited in the embodiment of the present invention, for example, if the actual password to be delivered is 123456, encryption is performed by inversing the password, and thus 654321 is transmitted. Here, the description is merely for illustration, and a better encryption manner having higher security may be used in actual transmission.

Since the embodiment of the present invention is described with the scenario in which the password of the ONU/ONT device needs to be changed, before the OLT delivers the OMCI password change message as described in Step 201, the ONU/ONT has accomplished an authentication and registration process using an existing password input and saved when the ONU/ONT is powered on, and the process is the same as the detection and authentication process of an ONU/ONT device described in the prior art, so the details thereof will not be given herein again.

In Step 202, the ONU/ONT at the user side receives the OMCI password change message delivered from the OLT, decrypts the OMCI message, acquires a new password carried in the OMCI message, and changes a locally saved password into the new password designated in the OMCI message.

After receiving the OMCI message, the ONU/ONT at the user side decrypts the OMCI message first according to a pre-determined encryption manner with the OLT, finds the corresponding new password from the decrypted OMCI message according to its own ONU-ID, and changes the locally saved original password into the new password designated in the OMCI message.

In Step 203, the ONU/ONT encrypts an OMCI message carrying a processing result and reports the encrypted OMCI message to the OLT after changing the locally saved original password into the new password.

The ONU/ONT may report the processing result to the OLT through a newly added OMCI message in an uplink direction (the message is sent from the user side to the central office); the encryption manner for the OMCI message may be flexibly used according to actual demands, and the specific encryption manner is not limited in the embodiment of the present invention. The processing result of the password in the OMCI message is the same as that in the PLOAM message, that is, the processing result of 0 indicates successful change, and 1 indicates failed change.

In Step 204, the OLT receives the OMCI message reported by the ONU/ONT, decrypts the OMCI message, and extracts the processing result from the OMCI message.

After receiving the OMCI message, the OLT decrypts the OMCI message first according to the predetermined encryption manner with the ONU/ONT, and finds the corresponding processing result of the ONU/ONT from the decrypted OMCI message according to the ONU-ID.

In Step 205, the ONU/ONT accomplishes the authentication and registration with the OLT using the new password.

According to the processing result in the OMCI message, the ONU/ONT having successfully changed the password (the result of 0 is returned) employs the changed new password to re-register, and the registration process is the same as the detection and authentication process of an ONU/ONT device in the prior art, so the details thereof will not be given herein again. For the ONU/ONT of failed change of the password (the result of 1 is returned), the OLT at the central office side re-delivers the OMCI password change message, and reference can be made to the above steps for the process.

To sum up, the embodiment of the present invention provides a method for enabling a terminal to obtain a password, and the change of the password of the ONU/ONT is realized through the method by providing a password from the OLT side to the ONU/ONT device, such that the efficiency of the change work is improved, and the workload of the change is reduced, thereby lowering the maintenance cost of the operator.

### Embodiment 3

Referring to FIG. 5, the embodiment of the present invention provides a system for enabling a user side terminal to obtain a password, which includes an OLT 500 and a user side terminal 510.

The OLT 500 is configured to deliver a notification message, in which the notification message carries password information delivered from the OLT 500; receive a response message returned from the user side terminal 510; and accomplish an authentication and registration process by the user side terminal 510 according to the password information.

The user side terminal 510 is configured to receive the notification message delivered from the OLT 500, acquire the password information carried in the notification message, return the response message to the OLT 500, and accomplish the authentication and registration process with the OLT 500 according to the password information.

The user side terminal 510 changes original password information of the user side terminal 510 according to the password information carried in the obtained notification message, returns a response message of successful change to the OLT 500 after the original password information is successfully changed, and accomplishes the authentication and registration process with the OLT 500 according to the successfully changed password information.

When multiple user side terminals 510 are present in the system, the OLT 500 in the system of the embodiment of the present invention may be further configured to deliver a notification message to at least one user side terminal 510, in which the notification message carries an identifier of the user side terminal 510 and the password information.

To sum up, in the system for enabling the user side terminal to obtain the password according to the embodiment of the present invention, the password information or a key is provided by the OLT side to the ONU/ONT device, and thus the ONU/ONT side obtains the password information to change its own password information, such that the efficiency of the change work is improved, and the workload of the change is reduced, thereby lowering the maintenance cost of the operator.

### Embodiment 4

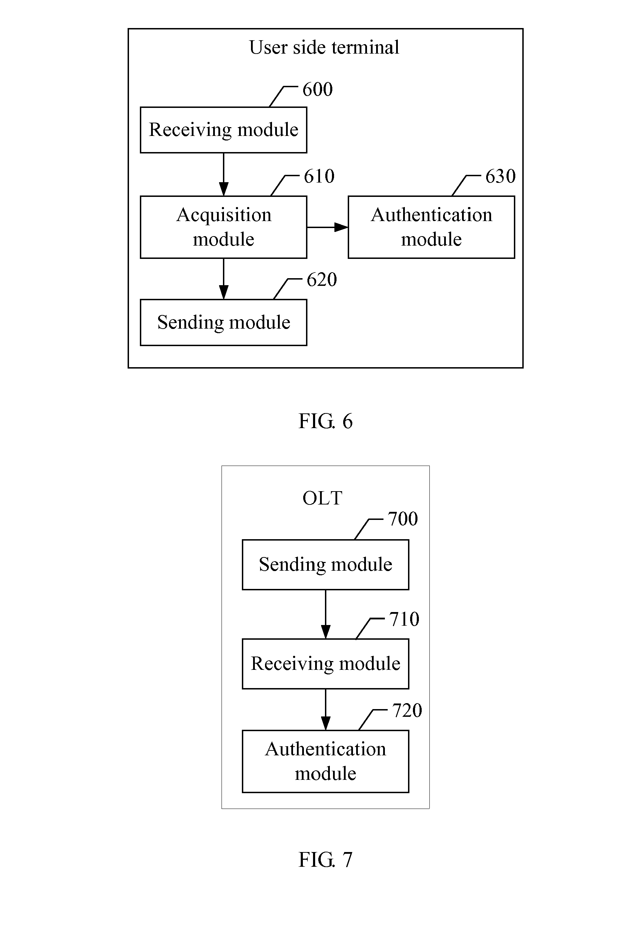

Referring to FIG. 6, the embodiment of the present invention provides a user side terminal, which includes:
a receiving module 600, configured to receive a notification message delivered from an OLT;
an acquisition module 610, configured to acquire password information carried in the notification message received by the receiving module 600;
a sending module 620, configured to return a response message to the OLT; and
an authentication module 630, configured to accomplish an authentication and registration process with the OLT according to the password information acquired by the acquisition module 610.

The terminal further includes:
a processing module, configured to change original password information of the user side terminal according to the password information carried in the notification message acquired by the acquisition module 610.

Correspondingly, the sending module 620 is configured to return a response message of successful change to the OLT when a processing result of the processing module is successful change, and return a response message of failed change to the OLT when the processing result of the processing module is failed change.

Correspondingly, the authentication module 630 is configured to accomplish the authentication and registration process with the OLT according to the successfully changed password information after the processing module successfully changes the original password information.

To sum up, through the user side device according to the embodiment of the present invention, the password information or a key is provided by the OLT side to the user side device (the ONU/ONT device), and thus the ONU/ONT obtains the password information to change its own password information, such that the efficiency of the change work is improved, and the workload of the change is reduced, thereby lowering the maintenance cost of the operator.

### Embodiment 5

Referring to FIG. 7, the embodiment of the present invention provides an OLT, which includes:
a sending module 700, configured to deliver a notification message to a user side terminal, in which the notification message carries password information delivered from the OLT;
a receiving module 710, configured to receive a response message returned from the user side terminal after the sending module sends the notification message; and
an authentication module 720, configured to accomplish an authentication and registration process by the user side terminal based on the password information, according to the response message received by the receiving module 710.

The sending module 700 is specifically:
a sending unit, configured to deliver the notification message to at least one user side terminal, in which the notification message carries an identifier of the user side terminal and the password information.

To sum up, through the OLT according to the embodiment of the present invention, the password information or a key is provided by the OLT to the ONU/ONT device, and thus the ONU/ONT obtains the password information to change its own password information, such that the efficiency of the change work is improved, and the workload of the change is reduced, thereby lowering the maintenance cost of the operator.

The embodiment of the present invention may be accomplished through software, and the corresponding software program may be stored in a readable storage medium, for example, a hard disk, a memory, or an optical disk of a router.

The above descriptions are merely preferred embodiments of the present invention, but are not intended to limit the present invention. Any modification, equivalent replacement, or improvement made without departing from the spirit and principle of the present invention shall fall within the scope of the present invention.

## Claims

1. A method for enabling a user side terminal to obtain a password in a Passive Optical Network, PON, comprising:
receiving, by a user side terminal, a notification message delivered from an Optical Line Terminal, OLT, wherein the notification message carries password information delivered from the OLT;
obtaining, by the user side terminal, the password information carried in the notification message, and returning a response message to the OLT; and
accomplishing, by the user side terminal, an authentication and registration process with the OLT according to the password information.

2. The method according to claim 1, wherein after the obtaining the password information carried in the notification message, the method further comprises:
changing, by the user side terminal, original password information of the user side terminal according to the obtained password information;
correspondingly, the returning the response message to the OLT specifically comprises:
returning, by the user side terminal, the response message to the OLT, wherein the response message carries information of whether the change is successful; and
correspondingly, the accomplishing the authentication and registration process with the OLT according to the password information specifically comprises:
accomplishing, by the user side terminal, the authentication and registration process with the OLT according to the successfully changed password information.

3. The method according to claim 1, wherein
when the PON is a Gigabit Passive Optical Network, GPON, the notification message specifically comprises:
a downlink Physical Layer Operation Administration and Maintenance, PLOAM, message, or a downlink Optical Network Unit Management and Control Interface, OMCI, message; and correspondingly, the returned response message specifically comprises an uplink PLOAM message, or an uplink OMCI message; and
when the PON is an Ethernet Passive Optical Network, EPON, the notification message specifically comprises:
a downlink Operation Administration Maintenance, OAM, message; and correspondingly, the returned response message specifically comprises an uplink OAM message.

4. The method according to claim 1, wherein
when the PON is a GPON, the password information is specifically a password; and
when the PON is an EPON, the password information is specifically a key.

5. The method according to claim 1, wherein the notification message carries an identifier of at least one user side terminal and the password information, and the obtaining, by the user side terminal, the password information carried in the notification message specifically comprises:
querying, by the user side terminal, the corresponding password information from the notification message according to its own identifier.

6. A system for enabling a user side terminal to obtain a password, comprising an Optical Line Terminal, OLT, and at least one user side terminal, wherein
the OLT is configured to deliver a notification message, wherein the notification message carries password information delivered from the OLT; receive a response message returned from the user side terminal; and accomplish an authentication and registration process by the user side terminal according to the password information; and
the user side terminal is configured to receive the notification message delivered from the OLT, acquire the password information carried in the notification message, return the response message to the OLT, and accomplish the authentication and registration process with the OLT according to the password information.

7. The system according to claim 6, wherein the user side terminal is further configured to change original password information of the user side terminal according to the obtained password information carried in the notification message, return a response message of successful change to the OLT after the password is successfully changed, and accomplish the authentication and registration process with the OLT according to the successfully changed password information.

8. A user side terminal, comprising:
a receiving module, configured to receive a notification message delivered from an Optical Line Terminal, OLT;
an acquisition module, configured to acquire password information carried in the notification message;
a sending module, configured to return a response message to the OLT; and
an authentication module, configured to accomplish an authentication and registration process with the OLT according to the password information acquired by the acquisition module.

9. The terminal according to claim 8, further comprising:
a processing module, configured to change original password information of the user side terminal according to the password information carried in the notification message and acquired by the acquisition module, wherein
correspondingly, the sending module is configured to return a response message of successful change to the OLT when a processing result of the processing module is successful change, and return a response message of failed change to the OLT when the processing result of the processing module is failed change; and
correspondingly, the authentication module is configured to accomplish the authentication and registration process with the OLT according to the successfully changed password information after the processing module successfully changes the original password information.

10. An Optical Line Terminal, OLT, comprising:
a sending module, configured to deliver a notification message to a user side terminal, wherein the notification message carries password information delivered from the OLT;
a receiving module, configured to receive a response message returned from the user side terminal; and
an authentication module, configured to accomplish an authentication and registration process by the user side terminal based on the password information, according to the response message received by the receiving module.

11. The OLT according to claim 10, wherein the sending module is specifically:
a sending unit, configured to deliver the notification message to at least one user side terminal, wherein the notification message carries an identifier of the user side terminal and the password information.
